Europäisches Patentamt

European Patent Office

Office européen des brevets

(19)

(11) **EP 0 973 290 A2**

(12) **EUROPEAN PATENT APPLICATION**

(43) Date of publication:
**19.01.2000 Bulletin 2000/03**

(51) Int. Cl.[7]: **H04J 3/24**, H04N 7/52

(21) Application number: **99202208.7**

(22) Date of filing: **06.07.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **11.07.1998 GB 9815014**

(71) Applicant: **NDS Limited**
**Chilworth, Southampton, Hampshire SO16 7NS (GB)**

(72) Inventor: **Budge, Michael**
**Winchester, Hampshire SO22 6RU (GB)**

(74) Representative:
**Anderson, Angela Mary**
**NDS Limited,**
**Gamma House,**
**Enterprise Road**
**Chilworth, Hampshire SO16 7NS (GB)**

(54) **Statistical data multiplexing**

(57) The invention relates to multiplexing data packets in a data service channel with data in one or more digital video signal channels to form a multiplexed output signal. The data in the data service channel may include control data, conditional access data, electronic program guides, paged data services, service information, broadcast internet information, and business information such as financial share information.

The data packets each comprise a time stamp indicating a requested delivery time and the data packets are sorted into a queue in time stamp order. The urgency of the data service channel is calculated as a function of the queue length and requested delivery times. The share of the bit rate of the multiplexed output signal allocated to the data service channel is varied according to its urgency. An error value is calculated for each data packet to represent the error between the expected delivery time and the requested delivery time to the head of the queue and the urgency of the data channel is derived as an average of the error values. The average may be a weighted average.

Fig.1.

## Description

The present invention relates to multiplexing a digital data service channel with one or more video signal channels, the data and video signal channels sharing the bit rate capacity of a multiplexer.

In a known method of multiplexing television channels for transmission to a receiver, the video signal channels are multiplexed by means of a statistical multiplexer in which a share of the bit rate capacity of the multiplexer is allocated to each of the video signal channels according to picture quality. Some pictures require a much higher bitrate than others to achieve an acceptable picture quality and a multiplex control computer is used to perform the allocation of bitrate between the channels according to the criticality of the picture material to be transmitted.

Broadcasters are interested in transmitting data services in a data channel alongside the video signal channels. Such data may include control data for controlling headend sites, conditional access data for enabling and disabling receivers, electronic program guides, paged data services, service information, broadcast internet information, and business information such as financial share information. Such data services are characterised by the transmission of bursts of data demanding a high bitrate capacity for transmission. If a share of the bitrate capacity of the multiplex is allocated to peaks in demand of the data services, there is likely to be a significant wastage of capacity in the quiet intervals between the peaks.

It is the aim of the present invention to provide an improvement in the utilisation of bitrate capacity in a multiplexer used to multiplex a data service channel with one or more digital video signal channels.

According to the present invention, there is provided a method of multiplexing data packets in a data service channel with data in one or more signal channels, the method comprising the steps of: marking each data packet with a requested priority; sorting the data packets into a queue in priority order; calculating the urgency of the packets as a function of the queue length and the requested priority; and, varying the share of the bit rate capacity allocated to the data service channel according to the urgency of the data packets.

Further according to the present invention there is provided a multiplex apparatus for multiplexing data packets in a data service channel with data in one or more signal channels, the data packets each comprising a mark indicating a requested priority, the apparatus comprising: a sorter for sorting the data packets into a queue in priority order; a calculator for calculating the urgency of the data packets as a function of the queue length and the requested priority; and, a controller for varying the share of the bit rate capacity allocated to the data service channel according to the urgency of the data packets.

By categorising the data in the data service channel according to delivery urgency, packets of data relating to urgent information, such as urgent financial data, can be distinguished from less urgent data, such as broadcast internet data. The bitrate allocated to the data service channel can thus be varied to accommodate the most urgent data without wasting capacity to deal with less urgent data.

The invention will now be described, by way of example, with reference to the accompanying drawings in which:

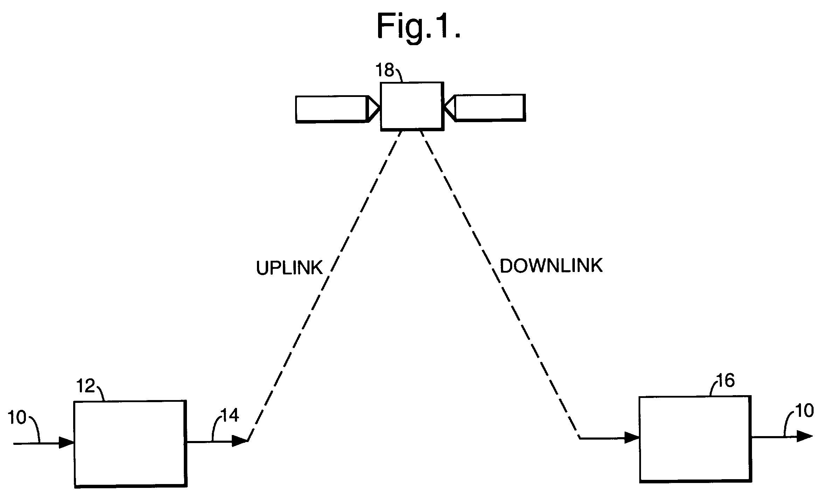

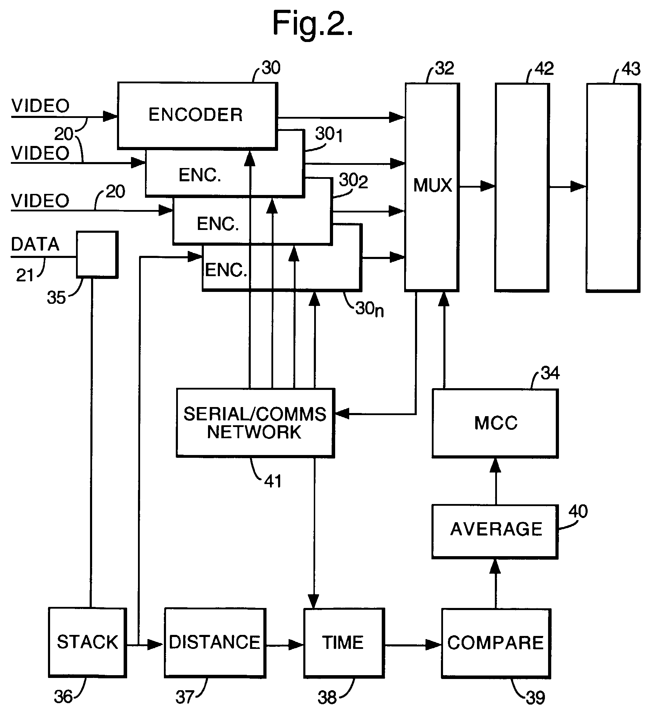

Figure 1 is a block diagram of a transmitting and receiving system embodying the present invention; and, Figure 2 shows multiplex apparatus incorporated into the system of Figure 1.

Figure 1 shows a transmission and receiving system in which a multiplexed television and data signal 10 is input to a transmitter 12. The detail of the transmission channel for the signal 10 will be described later. The signal undergoes signal processing as it passes through the transmission channel and a transmission signal 14 is generated. The transmission signal is then transmitted to a receiver 16 where it is converted back into the component television and data signals. The television and data signals may either be displayed for viewing or re-transmitted to another receiver, if necessary. In the Figure 1 system the transmission from the transmitter end to the receiver end is via a satellite 18. Clearly other means of transmission could be used in place of satellite transmission.

Referring now to Figure 2, each transmission channel of the transmitter 12 includes a digital encoder 30 to $30_{(n)}$. The encoders 30 to $30_{(n-1)}$ are television signal encoders to receive the television signals 20 and the encoder $30_{(n)}$ is a data signal encoder to receiver a data signal 21. The encoders 30, $30_1$, $30_2$ ......... $30_n$ have a combined total bitrate (or group bitrate) allocated to them and a multiplexer 32 is provided to multiplex the digital signals from the encoders. The multiplexer is a statistical multiplexer that apportions the group bitrate to the individual encoders in such a way as to meet the individual requirements of each encoder at that point in time.

The television signal channels each have a linear target picture quality which may be determined by the user (or broadcaster) and is the measure of the picture quality the user expects the encoder in that channel to achieve. Preferences may be attached to individual television channels by allocating a higher than average target for picture quality in the statistical multiplexer group. The data signal channel includes data packets $P_{(n)}$ which have a variable length $L_{(n)}$. Each data packet passes through a time stamp so that a required to delivery $Td_{(n)}$ is stamped by the user on to the data packet. The required delivery time is the latest time for entry of the data packet into the MUX 32.

The data signal 21 is first received by a data buffer 35 from which the data packets are fed to a stack module 36. The stack module 36 includes a sort facility which sorts the arriving packets into a time ordered queue. This is done by calculating a time difference $Dt_{(n)}$ for each packet where $Dt_{(n)} = Td_{(n)} - t$ and $t$ is the time now. The data packet with the smallest value of $Dt_{(n)}$ is put at the head of the queue in the stack module 36 and the data packet with the largest value $Dt_{(n)}$ is put at the tail of the queue.

The distance from the head of the queue is calculated for each data packet by means of a distance-calculating module 37. The distance of each packet from the head of the queue is calculated by summing the lengths $L_{(n)}$ of the preceding data packets in the queue to give a value $Lhead_{(n)}$ The expected time $Dd_{(n)}$ before delivery of a data packet from the head of the queue in the stack 37 to the multiplexer is calculated by a module 38 from $Dd_{(n)} = Lhead_{(n)}/Dt$ where $Dt$ is a given bitrate allocated to the data encoder $30_{(n)}$.

A comparator module 39 is provided to compare the expected and required delivery times for each data packet to calculate an error value for each data packet. The difference between the expected and required delivery time for a data packet is a positive quantity when the data packet will be late and a negative quantity when the data packet will be early. When positive, the magnitude of the error value indicates the amount by which the data packet will be late. When negative, the magnitude of the error value indicates the amount by which the data packet will be early.

An averaging module 40 operates on the error values calculated by the comparator module 39 so as to derive an average of the error values. The average generated by the averaging module is an urgency value and may be calculated as a mathematical average or as a weighted average. The weighting may be applied to favour data packets that would be late.

The urgency value from the averaging module 40 is fed to the multiplexer 32 when the multiplexer requests it and is used to compute the bitrate for the data encoder $30_{(n)}$. The bitrate allocated to the data service is made up from three potential sources such that:

$$Dt = At + Bt + Ct$$

where At is a scheduled fixed bitrate element selected by the user, Bt is a variable bitrate that is requested according to the urgency value from the averaging module 40 and Ct is a spare bitrate element that is available within the statistical multiplexer group.

Each video encoder has a bitrate that is variable to adjust the linear picture quality in the channel thereof and each video encoder has means to signal to the multiplexer an indication of the linear picture quality in its channel. The multiplexer is operative to pool the video encoders and the data encoder interactively to receive the indication of picture quality from each video channel and the indication of data urgency from the data channel. The multiplexer is connected through a control network 41 to vary the bitrates of the encoders so as to distribute the total allocated bitrate between the encoders. When allocating the new bitrates to the encoders the MUX must ensure that the bitrates will not infringe any decoder buffer models and does not exceed any bitrate limits specified by the user. Thus, the statistical multiplexer system is capable of responding to variations in the criticality of source material and adjusts the operation of one or more encoders within the statistical multiplexer group, to optimise operation of the system. The distribution of the total bitrate is such as to tend to equalise the percentage difference between the actual and target linear picture quality for all of the video encoders and to allow the data urgency requirements to be met.

In the statistical multiplexer system the multiplexer is master and must communicate with the encoders slaved to it, as often as possible if variations in picture difficulty and data urgency are to be fully exploited. It is felt that to exploit the potential of this invention, bitrate requirements should be reassessed for each encoder as often as possible. The multiplexer may communicate with the encoders connected to it via a dedicated fast communications network that connects the multiplexer to each of its encoders.

It is the task of the multiplexer to divide the total available bitrate, between the encoders in a statistical multiplexer group, in such a way as to achieve the target quality and data urgency of each encoder. Then to continually assess the performance of each encoder and adjust the bitrates to keep the actual quality and data urgency reported to the encoder as close to the target as possible. Other secondary tasks of the multiplexer are:

> a) to keep the system controller or MCC informed on how realistic the target figures are for the total available bitrate, ie, how well the encoders are achieving target figures;
> b) to ensure that maximum and minimum boundaries are not exceeded for each encoder, or that bitrate changes allocated to an encoder do not cause decoder buffer over/under flow.

The unit of exchange between the system control computer MCC and video encoder and multiplexer must be some measure of picture quality, rather than because different video channels allocated the same linear quality target figure may have different bitrate requirements.

Once the task of the statistical multiplexer system has been completed the output signal produced by the MUX may be modulated through a modulator 42 to produce a modulated signal that is transmitted to a remote receiver 43. The MUX may communicate with the encoders in order to control their operation by means of the communication network 41.

Further details of the allocation of bitrate between video encoders in dependence upon a measure of linear quality target figures are to be found our corresponding patent application number: GB 9517130.2

It will be apparent that while only one data signal channel has been described, there may be two or more data channels included in the statistical multiplexer group. It will also be apparent that the data to be conveyed by the data channel may be encoded so as to be in packets if equal length rather than of variable length.

What has been described is a statistical multiplexing system in which a data service channel supplies data packets each of which has a time stamp indicating the time of delivery to the multiplexer 32. The apparatus has a stack module 36 to sort the data packets into a queue in time stamp order. The modules 37, 38, 39 and 40 calculate the urgency of the data packets as a function of the queue length and the MCC 34 varies the share of the bitrate capacity of the multiplexer 32 according to the urgency value supplied by the average module 40.

It will be apparent that the data packets may be marked with a mark other than a time stamp indicating the time of delivery. The alternative is to employ a mark for each data packet that indicates the priority of the data packet. In this case the urgency of the data packets is calculated as a function of the queue length and the requested priority.

**Claims**

1. A method of multiplexing data packets in a data service channel with data in one or more signal channels, the method comprising the steps of:

    marking each data packet with a requested priority;
    sorting the data packets into a queue in priority order;
    calculating the urgency of the packets as a function of the queue length and the requested priority; and,
    varying the share of the bit rate capacity allocated to the data service channel according to the urgency of the data packets.

2. A method as claimed in Claim 1, wherein the marking of each data packet with a requested priority comprises marking each data packet with a time stamp to indicate a requested delivery time, the data packets are sorted in to the queue in time stamp order and the urgency of the data packets is calculated as a function of the queue length and the requested delivery times.

3. A method as claimed in Claim 2, wherein an error value is calculated for each data packet to represent the error between the expected delivery time and the requested delivery time to the head of the queue and the urgency of the data channel is derived from the error values.

4. A method as claimed in Claim 3, wherein the urgency of the data channel is derived from an average of the error values.

5. A method as claimed in Claim 4, wherein the average is an arithmetic average.

6. A method as claimed in Claim 4, wherein the average is a weighted average.

7. A method as claimed in any one of the preceding claims, wherein the signal channels are digital video signal channels and a measure is derived of the linear picture quality of each video signal channel, a share of the bitrate of the multiplexed output signal being allocated to each video signal channel in dependence upon its picture quality.

8. A method as claimed in Claim 7, wherein the data service channel and the video signal channels comprise a statistical multiplex group, the bitrate allocated to the data service channel comprising a scheduled fixed bitrate element, a variable bitrate element determined according to the urgency of the data service channel and a spare bitrate element available within the statistical multiplex group.

9. Multiplex apparatus for multiplexing data packets in a data service channel with data in one or more signal channels, the data packets each comprising a mark indicating a requested priority, the apparatus comprising:

    a sorter for sorting the data packets into a queue in priority order;
    a calculator for calculating the urgency of the data packets as a function of the queue length and the requested priority; and,
    a controller for varying the share of the bit rate capacity allocated to the data service channel according to the urgency of the data packets.

10. Apparatus as claimed in Claim 9, which is for multiplexing data packets in a data service channel in which the data packets each comprise a time stamp for indicating a requested delivery time, the sorter being adapted to sort the data packets into a queue in time stamp order and the calculator being adapted to calculate the urgency of the data packets as a function of the queue length and the requested delivery times.

**11.** Apparatus as claimed in Claim 10, wherein the calculator is adapted to calculate an error value for each data packet to represent the error between the expected delivery time and the requested delivery time to the head of the queue and to calculate the urgency of the data channel from the error values.

**12.** Apparatus as claimed in Claim 11, which is for multiplexing data packets in a data service channel in which the data packets each comprise a time stamp for indicating a requested delivery time, the sorter being adapted to sort the data packets into a queue in time stamp order and the calculator being adapted to calculate the urgency of the data packets as a function of the queue length and the requested delivery times.

**13.** Apparatus as claimed in Claim 12, wherein the average is an arithmetic average.

**14.** Apparatus as claimed in Claim 12, wherein the average is a weighted average.

**15.** Apparatus as claimed in any one of claims 9 to 14, wherein the signal channels are digital video signal channels and an encoder is provided for each video signal channel which is adapted to signal a measure of the linear picture quality of the channel, the controller being adapted to allocate a share of the bitrate of the multiplexed output signal to each video signal channel in dependence upon its picture quality.

**16.** Apparatus as claimed in Claim 15, wherein the data service channel and the video signal channels comprise a statistical multiplex group, the controller being adapted to allocate to the data service channel a bitrate comprising a scheduled fixed bitrate element, a variable bitrate element determined according to the urgency of the data service channel and a spare bitrate element available within the statistical multiplex group.

Fig.1.

UPLINK

DOWNLINK

# Fig.2.